# EUROPÄISCHE PATENTSCHRIFT

(11) **EP 2 567 049 B1**
(45) Veröffentlichungstag und Bekanntmachung des Hinweises auf die Patenterteilung: **15.06.2016**
(21) Anmeldenummer: 11722727.2
(22) Anmeldetag: 20.04.2011
(51) Int. Cl.: E05B 65/00, E05F 15/00

(54) **BEDIENVERFAHREN UND BEDIENVORRICHTUNG FÜR EIN FAHRZEUG**
FUNCTION ACTIVATING METHOD AND DEVICE FOR A VEHICLE
PROCÉDÉ ET DISPOSITIF DE COMMANDE DE FONCTION POUR VÉHICULE

(30) Priorität: 05.05.2010 DE 102010019362
(43) Veröffentlichungstag der Anmeldung: 13.03.2013
(73) Patentinhaber: Volkswagen Aktiengesellschaft, 38436 Wolfsburg (DE); Hella KGaA Hueck & Co, 59552 Lippstadt (DE)
(72) Erfinder: WERNER, Stefan, 46399 Bocholt (DE); SCHARWALD, Lothar, 59558 Lippstadt (DE); GRAVE, Dietmar, 38527 Meine (DE); THIELE, Andreas, 38442 Wolfsburg (DE)
(86) Internationale Anmeldenummer: PCT/EP2011/002004
(87) Internationale Veröffentlichungsnummer: WO 2011/137977

(56) Entgegenhaltungen:
- EP-A1- 1 621 420
- EP-B1- 1 507 943
- DE-A1- 10 255 439
- DE-A1-102007 040 775

## Beschreibung

Die vorliegende Erfindung betrifft ein Bedienverfahren zur Aktivierung einer Bedienfunktion und eine Bedienvorrichtung zur Aktivierung dieser Bedienfunktion für ein Fahrzeug sowie ein entsprechend ausgestaltetes Fahrzeug.

Aus der DE 10 2007 040 775 A1 ist bekannt, eine bestimmte Bedienfunktion zu aktivieren, wenn gleichzeitig ein Entriegelungssensor und ein Verriegelungssensor eines Fahrzeugs betätigt werden. Dabei tritt allerdings häufig eine Fehlfunktion auf, wenn der Entriegelungssensor und der Verriegelungssensor unbeabsichtigt gleichzeitig betätigt werden.

Daher stellt sich die vorliegende Erfindung die Aufgabe, eine Häufigkeit einer unbeabsichtigten Aktivierung der bestimmten Bedienfunktion gegenüber dem Stand der Technik zu verringern.

Erfindungsgemäß wird diese Aufgabe durch ein Bedienverfahren für ein Fahrzeug nach Anspruch 1, durch eine Bedienvorrichtung für ein Fahrzeug nach Anspruch 7 und durch ein Fahrzeug nach Anspruch 8 gelöst. Die abhängigen Ansprüche definieren bevorzugte und vorteilhafte Ausführungsformen der vorliegenden Erfindung.

Im Rahmen der vorliegenden Erfindung wird ein Bedienverfahren für ein Fahrzeug bereitgestellt. Dabei wird eine erste Bedienfunktion aktiviert, wenn mit Hilfe eines ersten Sensors des Fahrzeugs erfasst wird, dass eine erste physikalische Größe (beispielsweise eine Kapazität, eine Induktivität, eine Magnetfeldgröße, eine Lichtstärke, eine Signallaufzeit oder ein Umfang (Strecke) einer Auslenkung eines Bedienelements) größer als ein vorbestimmter erster Schwellenwert ist. In ähnlicher Weise wird eine zweite Bedienfunktion aktiviert, wenn mit Hilfe eines zweiten Sensors des Fahrzeugs erfasst wird, dass eine zweite physikalische Größe größer als ein vorbestimmter zweiter Schwellenwert ist. Es ist im Rahmen der Erfindung auch möglich, dass die erste (zweite) Bedienfunktion aktiviert wird, wenn mit Hilfe des ersten (zweiten) Sensors erfasst wird, dass die erste (zweite) physikalische Größe kleiner als der vorbestimmter erste (zweite) Schwellenwert ist oder wenn mit Hilfe des ersten (zweiten) Sensors erfasst wird, dass eine Änderung der ersten (zweiten) physikalischen Größe größer als der vorbestimmte erste (zweite) Schwellenwert ist. Eine dritte Bedienfunktion wird aktiviert, wenn mit Hilfe des ersten Sensors erfasst wird, dass die erste physikalische Größe größer als ein vorbestimmter dritter Schwellenwert ist und wenn gleichzeitig mit Hilfe des zweiten Sensors erfasst wird, dass die zweite physikalische Größe größer als ein vorbestimmter vierter Schwellenwert ist. Dabei liegt der dritte Schwellenwert über dem ersten Schwellenwert. Wiederum kann die dritte Bedienfunktion auch dann aktiviert werden, wenn mit Hilfe des ersten Sensors erfasst wird, dass die erste physikalische Größe kleiner als der vorbestimmte dritte Schwellenwert ist (oder dass eine Änderung der ersten physikalischen Größe größer als der vorbestimmte dritte Schwellenwert ist), wenn gleichzeitig mit Hilfe des zweiten Sensors erfasst wird, dass die zweite physikalische Größe kleiner als der vorbestimmte vierte Schwellenwert ist (oder dass eine Änderung der zweiten physikalischen Größe größer als der vorbestimmte vierte Schwellenwert ist). Wenn eine Verringerung der ersten bzw. zweiten physikalischen Größe von den Sensoren für die Aktivierung der dritten Bedienfunktion zu erfassen ist, liegt der dritte Schwellenwert unterhalb des ersten Schwellenwerts.

Mit anderen Worten vermeidet die vorliegende Erfindung eine unbeabsichtigte Aktivierung der dritten Bedienfunktion, indem zumindest die Empfindlichkeit des ersten Sensors im Vergleich zu einer Empfindlichkeit bei einem Erfassen der entsprechenden physikalischen Größe zur Aktivierung der ersten Bedienfunktion verringert wird. Je nach dem wie der erste Sensor arbeitet, kann die Verringerung der Empfindlichkeit darin bestehen, dass der dritte Schwellenwert gegenüber dem ersten Schwellenwert erhöht oder abgesenkt wird, was davon abhängt, ob der erste Sensor eine Betätigung über eine Absenkung oder eine Erhöhung der ersten physikalischen Größe erfasst.

Bei dem zweiten Sensor kann es sich auch um eine Vorrichtung handeln, welche die Betätigung eines Bedienelements (beispielsweise eines Türgriffs) erfasst. In diesem Fall wird die zweite Bedienfunktion aktiviert, wenn eine Auslenkung des entsprechenden Bedienelements größer als der vorbestimmte zweite Schwellenwert ist, was beispielsweise auch über eine Art Schalter erfasst werden kann, welcher betätigt wird, wenn z.B. der Türgriff eines Fahrzeugs entsprechend weit gezogen wird. Wenn der zweite Sensor quasi als eine Art Schalter realisiert ist, entspricht der zweite Schwellenwert dem vierten Schwellenwert, was heißt, dass die Arbeitsweise des Schalters (die Empfindlichkeit des Schalters) zur Aktivierung der zweiten Bedienfunktion und zur Aktivierung der dritten Bedienfunktion gleich ist.

Durch die dynamische Auslöseschwelle (erster oder dritter Schwellenwert) des ersten Sensors ist eine Anpassung an verschiedene Anwendungsfälle möglich, so dass für die verschiedenen Anwendungsfälle unterschiedlich hohe Auslöseschwellen gelten. Durch unterschiedliche Sensorempfindlichkeiten zwischen einer einfachen Sensorfunktion (Aktivierung der ersten Bedienfunktion) und einer Sensorfunktion, welche durch eine Handhabungsreihenfolge aktiviert wird, (Aktivierung der dritten Bedienfunktion) kann die vorliegende Erfindung vorteilhafterweise an unterschiedliche Anforderungsprofile angepasst werden. Die Änderung der Empfindlichkeit des ersten Sensors kann dabei über den Abstand zwischen dem ersten und dem dritten Schwellenwert festgelegt werden.

Es handelt sich bei dem ersten und bei dem zweiten Sensor um einen kapazitiven Sensor und damit bei der ersten und zweiten physikalischen Größe um eine Kapazität.

Da kapazitive Sensoren beispielsweise zur Entriegelung oder Verriegelung eines Fahrzeugs, welches mit einem Keyless-Entry-System ausgestattet ist, eingesetzt werden, können diese Sensoren vorteilhafterweise auch zur Aktivierung der dritten Bedienfunktion eingesetzt werden.

Vorteilhafterweise kann der vierte Schwellenwert gleich dem zweiten Schwellenwert sein.

Allgemein bleibt erfindungsgemäß offen, ob auch die Empfindlichkeit des zweiten Sensors zur Aktivierung der dritten Bedienfunktion verändert wird. Es bieten sich allerdings Vorteile, beispielsweise eine geringere Komplexität, wenn nur die Empfindlichkeit des ersten Sensors zur Aktivierung der dritten Bedienfunktion erhöht wird. Dies gilt insbesondere dann, wenn der zweite Sensor als eine Art Schalter realisiert ist, wie es bereits vorab ausgeführt ist.

Der erste Sensor und der zweite Sensor sind derart an dem Fahrzeug angebracht, dass beide Sensoren von einer Bedienperson ohne Probleme, d.h. beispielsweise mit nur einer Hand, gleichzeitig aktiviert werden können.

Damit die dritte Bedienfunktion in einfacher Weise von derselben Bedienperson aktiviert werden kann, ist es von Vorteil, wenn die beiden Sensoren örtlich dicht beieinander angeordnet sind.

Beispielsweise ist es möglich, dass sowohl der erste als auch der zweite Sensor an einem Türaußengriff des Fahrzeugs angebracht sind.

Dabei ist es möglich, dass die erste Bedienfunktion einer automatischen Verriegelung einer dem Türaußengriff zugeordneten Tür oder einer automatischen Verriegelung des gesamten Fahrzeugs entspricht. In diesem Fall kann die zweite Bedienfunktion einer automatischen Entriegelung dieser Tür oder einer automatischen Entriegelung des gesamten Fahrzeugs entsprechen, während die dritte Bedienfunktion einem automatischen Öffnen mindestens eines Schließelements des Fahrzeugs entspricht. Das mindestens eine Schließelement kann dabei alle automatisch zu öffnenden Fenster und Schiebedächer des Fahrzeugs umfassen, so dass bei einer Aktivierung der dritten Bedienfunktion alle Fenster und Schiebedächer des Fahrzeugs automatisch geöffnet werden.

Eine Aktivierung einer der Bedienfunktionen ist allerdings insbesondere nur dann möglich, wenn vorher ein berechtigter ID-Geber bzw. ein Funkschlüssel für ein Keyless-Entry-System des Fahrzeugs erfasst wird.

Im Rahmen der vorliegenden Erfindung wird auch eine Bedienvorrichtung für ein Fahrzeug bereitgestellt. Dabei umfasst die Vorrichtung eine Steuerung, einen ersten Sensor und einen zweiten Sensor. Die Vorrichtung ist derart ausgestaltet, das die Steuerung automatisch eine erste Bedienfunktion aktiviert, wenn sie über den ersten Sensor erfasst, dass eine erste physikalische Größe größer als ein vorbestimmter erster Schwellenwert ist. In ähnlicher Weise aktiviert die Steuerung automatisch eine zweite Bedienfunktion, wenn sie über den zweiten Sensor erfasst, dass eine zweite physikalische Größe größer als ein vorbestimmter zweiter Schwellenwert ist. Darüber hinaus ist die Vorrichtung derart ausgestaltet, dass die Steuerung automatisch eine dritte Bedienfunktion aktiviert, wenn sie mit Hilfe des ersten Sensors erfasst, dass die erste physikalische Größe größer als ein vorbestimmter dritter Schwellenwert ist und wenn sie gleichzeitig mittels des zweiten Sensors erfasst, dass die zweite physikalische Größe größer als ein vorbestimmter vierter Schwellenwert ist. Dabei ist der dritte Schwellenwert größer als der erste Schwellenwert.

In ähnlicher Weise wie bei dem erfindungsgemäßen Verfahren ist es auch möglich, dass die erste (zweite) Bedienfunktion aktiviert wird, wenn der erste (zweite) Sensor erfasst, dass die erste (zweite) physikalische Größe kleiner als der vorbestimmte erste (zweite) Schwellenwert ist oder dass eine Änderung der ersten (zweiten) physikalischen Größe größer als der vorbestimmte erste (zweite) Schwellenwert ist. Wichtig ist, dass die Empfindlichkeit des ersten Sensors zur Aktivierung der dritten Bedienfunktion über die Einstellung des dritten Schwellenwerts kleiner eingestellt ist, als dies zur Aktivierung der ersten Bedienfunktion (abhängig von dem ersten Schwellenwert) der Fall ist.

Die Vorteile der erfindungsgemäßen Bedienvorrichtung entsprechen im Wesentlichen den Vorteilen des erfindungsgemäßen Verfahrens, welche vorab im Detail ausgeführt worden sind, so dass hier auf eine Wiederholung verzichtet wird.

Schließlich wird im Rahmen der vorliegenden Erfindung ein Fahrzeug mit einer erfindungsgemäßen Bedienvorrichtung bereitgestellt.

Mit der vorliegenden Erfindung kann eine neue Bedienfunktion eines Fahrzeugs realisiert werden, ohne dass dazu auch ein neuer Sensor benötigt wird.

Die vorliegende Erfindung ist insbesondere zur Aktivierung einer Bedienfunktion für ein Fahrzeug über außen am Fahrzeug angebrachte Sensoren geeignet. Selbstverständlich ist die vorliegende Erfindung jedoch nicht auf diesen bevorzugten Anwendungsbereich eingeschränkt, da die vorliegende Erfindung zum einen auch bei im Innenraum des Fahrzeugs angebrachten Sensoren einsetzbar ist und da die vorliegende Erfindung zum anderen auch bei Flugzeugen, Schiffen und gleisgebundenen Fahrzeugen eingesetzt werden kann.

Im Folgenden wird die vorliegende Erfindung anhand bevorzugter erfindungsgemäßer Ausführungsformen im Detail mit Bezug zu den Figuren beschrieben.
- In Fig. 1: ist insbesondere ein Signalverlauf eines von einem Sensor erfassten Signals zur Aktivierung einer Fahrzeugverriegelung dargestellt.
- In Fig. 2: ist insbesondere ein Signalverlauf eines von einem Sensor erfassten Signals zur Aktivierung einer Fahrzeugentriegelung dargestellt.
- In Fig. 3: ist ein Signalverlauf von zwei jeweils von einem Sensor erfassten Signalen zur Aktivierung einer dritten Bedienfunktion dargestellt.
- Fig. 4: stellt schematisch ein erfindungsgemäßes Fahrzeug mit einer erfindungsgemäßen Bedienvorrichtung dar.

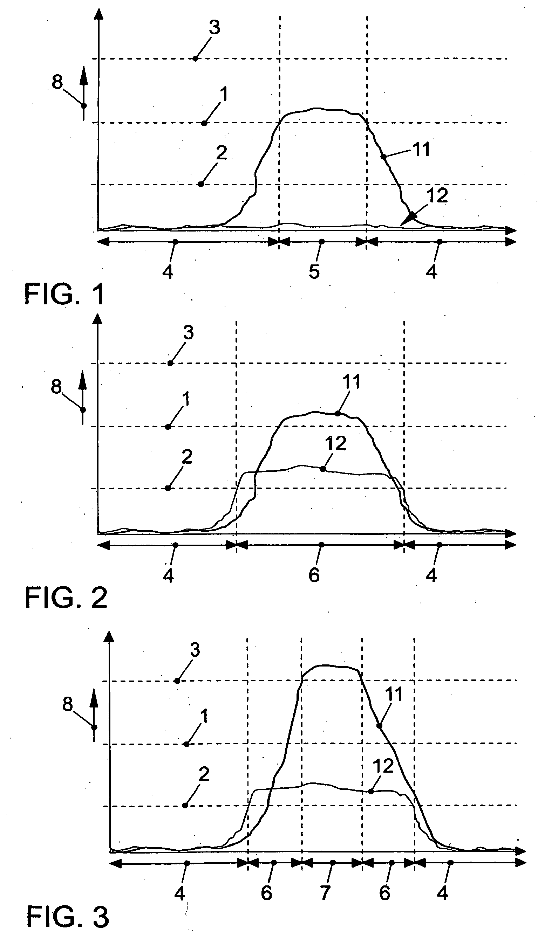

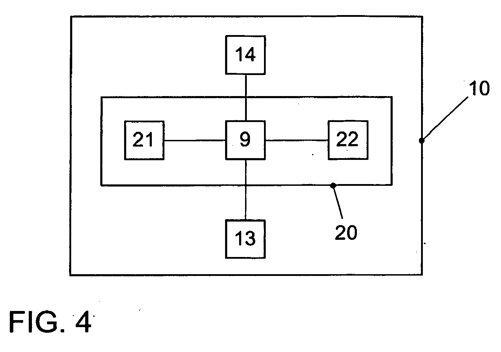

In Fig. 1 ist ein Signalverlauf 11 zur Aktivierung einer Verriegelung eines Fahrzeugs dargestellt. Ein in Fig. 4 dargestellter erster Sensor (Verriegelungssensor) 21 ist an einer bestimmten Stelle außen an einem Türgriff des Fahrzeugs angeordnet, während ein ebenfalls in Fig. 4 dargestellter zweiter Sensor (Entriegelungssensor) 22 an einer Innenseite dieses Türgriffs angeordnet ist. In Fig. 1 sind die Signalverläufe 11, 12 der beiden Sensoren 21, 22 über der Zeit dargestellt, wobei eine von dem jeweiligen Sensor 21, 22 erfasste Kapazität 8 dargestellt ist, da es sich bei den Sensoren 21, 22 um Kapazitätssensoren handelt. Die waagerecht in der Fig. 1 verlaufenden gestrichelten Linien 1-3 stellen einen ersten Schwellenwert 1, einen zweiten Schwellenwert 2 und einen dritten Schwellenwert 3 dar. In Fig. 1 überschreitet der Kapazitätsverlauf 11 des ersten Sensors 21 in einer mit dem Bezugszeichen 5 dargestellten Zeitspanne den ersten Schwellenwert 1, was zu einer Verriegelungs-Signalisierung führt. Diese Verriegelungs-Signalisierung führt zu einer Verriegelung des Fahrzeugs, wenn gleichzeitig ein für dieses Fahrzeug berechtigter ID-Geber von einem Keyless-Entry-System des Fahrzeugs erfasst wird. Da zu den mit dem Bezugszeichen 4 gekennzeichneten Zeitspannen weder die von dem ersten Sensor 21 erfasste Kapazität 11 über dem ersten Schwellenwert 1 noch die von dem zweiten Sensor 22 erfasste Kapazität 12 über dem zweiten Schwellenwert 2 liegt, erfolgt zu diesen Zeitspannen 4 keine Signalisierung.

Die Fig. 2 entspricht in ihrem Aufbau (beispielsweise bezüglich der Schwellenwert 1-3) der Fig. 1, wobei in Fig. 2 andere Signalverläufe 11, 12 der beiden Sensoren 21, 22 dargestellt sind. Bei dem in Fig. 2 dargestellten Fall, wurden gleichzeitig der erste Sensor 21 und der zweite Sensor 22 betätigt. Für die mit dem Bezugszeichen 6 gekennzeichneter Zeitspanne überschreitet der von dem zweiten Sensor 22 erfasste Kapazitätsverlauf 12 den zweiten Schwellenwert 2, wodurch es zu einer Entriegelungs-Signalisierung des Fahrzeugs kommt, bei welcher das Fahrzeug entriegelt wird, wenn gleichzeitig der entsprechende berechtigte ID-Geber erfasst wird. Die gleichzeitige Überschreitung des ersten Schwellenwerts 1 durch den Signalverlauf 11 des ersten Sensors 21 wird in diesem Fall unterdrückt, da der Signalverlauf 11 niemals den dritten Schwellenwert 3 überschreitet.

Es sei darauf hingewiesen, dass nach dem Stand der Technik Vorrichtungen existieren, welche während der Zeitspanne, in welcher sowohl der Signalverlauf 11 des ersten Sensors 21 oberhalb des ersten Schwellenwerts 1 als auch der Signalverlauf 12 des zweiten Sensors 22 oberhalb des zweiten Schwellenwerts 2 liegen, die dritte Bedienfunktion nachteiligerweise aktiviert hätten.

Auch die Fig. 3 entspricht in ihrem Aufbau der Fig. 1 und damit der Fig. 2. Der Signalverlauf 11 des ersten Sensors 21 überschreitet allerdings in Fig. 3 für die Zeitspanne 7 auch den dritten Schwellenwert 3. Da auch der Signalverlauf 12 des zweiten Sensors 22 während dieser Zeitspanne 7 den zweiten Schwellenwert 2 überschreitet, führt dies zu einer Komfortöffnen-Signalisierung, wenn gleichzeitig wiederum der berechtigte ID-Geber erfasst wird. Dieses Komfortöffnen öffnet alle Fenster und Schiebedächer des Fahrzeugs, solange der erste Kapazitätssensor 21 eine Kapazität höher als der dritte Schwellenwert 3 und der zweite Kapazitätssensor 12 eine Kapazität höher als der zweite Schwellenwert 2 erfasst.

Indem für die Verriegelung der erste Schwellenwert 1 gilt, ist eine hohe Empfindlichkeit für den einfachen Verriegelungswunsch durch Betätigen des Verriegelungssensors am Türaußengriff gewährleistet, so dass auch eine Betätigung mit Handschuhen einfach möglich ist. Eine trotzdem störfeste Komfortöffnen-Funktion wird gewährleistet, indem zur Aktivierung der Komfortöffnen-Funktion der dritte Schwellenwert gilt. Damit führt ein ungewolltes Betätigen des Verriegelungssensors (z.B. beim Entriegeln des Fahrzeugs) in der Regel weder zum Verriegeln noch zum Komfortöffnen des Fahrzeugs.

Mit anderen Worten reagiert der Verriegelungssensor 22 auf den einfachen Verriegelungswunsch mit einer hohen Empfindlichkeit (erster Schwellenwert 1), so dass das Fahrzeug selbst beim Tragen dicker Handschuhe über den Verriegelungssensor 21 verriegelt werden kann. Dennoch wird das versehentliche oder durch Störungen herbeigeführte Öffnen der Fenster und des Schiebedachs durch die Komfortöffnen-Funktion vermieden.

Vor und nach der Zeitspanne 7 existiert in Fig. 3 eine Zeitspanne 6, in welcher zwar der zweite Sensor 22 eine Kapazität 12 oberhalb des zweiten Schwellenwerts 2 erfasst, in welcher allerdings die von dem ersten Sensor 21 erfasste Kapazität 11 unterhalb des dritten Schwellenwerts 3 liegt. Diese Konstellation führt zu einer Entriegelungs-Signalisierung, wie es bereits mit Bezug zu Fig. 2 erläutert worden ist. Da bei den Zeitspannen 4 sowohl der erste Sensor 21 eine Kapazität 11 unterhalb des ersten Schwellenwerts 1 und der zweite Sensor 22 eine Kapazität 12 unterhalb des zweiten Schwellenwerts 2 erfasst, liegt zu den Zeitspannen 4 keine Signalisierung vor.

In Fig. 4 ist schematisch ein erfindungsgemäßes Fahrzeug 10 dargestellt, welches neben einer erfindungsgemäßen Bedienvorrichtung 20 ein Fenster 13 und eine Tür 14 umfasst. Die Bedienvorrichtung 20 wiederum umfasst ihrerseits eine Steuerung 9, einen Verriegelungssensor 21 und einen Entriegelungssensor 22. Dabei ist der Entriegelungssensor 22 auf der Innenseite eines Türgriffs der Tür 14 und der Verriegelungssensor 21 auf der Außenseite dieses Türgriffs angeordnet. Wenn der Verriegelungssensor 21 derart betätigt wird, dass der dritte Schwellenwert 3 überschritten wird, und wenn gleichzeitig der Entriegelungssensor 22 derart betätigt wird, dass der erste Schwellenwert 1 überschritten wird, erfasst dies die Steuerung 9 und öffnet im Rahmen eines Komfortöffnens das Fenster 14 des Fahrzeugs 10.

## Patentansprüche

1. Bedienverfahren für ein Fahrzeug (10),
wobei eine erste Bedienfunktion aktiviert wird, wenn mittels eines ersten Sensors (21) erfasst wird, dass eine erste physikalische Größe (8) größer als ein vorbestimmter erster Schwellenwert (1) ist, und
wobei eine zweite Bedienfunktion aktiviert wird, wenn mittels eines zweiten Sensors (22) erfasst wird, dass eine zweite physikalische Größe (8) größer als ein vorbestimmter zweiter Schwellenwert (2) ist, wobei der erste Sensor (21) und der zweite Sensor (22) benachbart derart an dem Fahrzeug (10) angebracht sind, dass beide Sensoren (21, 22) von einer Bedienperson gleichzeitig aktiviert werden können,
**dadurch gekennzeichnet,**
**dass** eine dritte Bedienfunktion aktiviert wird, wenn mittels des ersten Sensors (21) erfasst wird, dass die erste physikalische Größe (8) größer als ein vorbestimmter dritter Schwellenwert (3) ist, und wenn gleichzeitig mittels des zweiten Sensors (22) erfasst wird, dass die zweite physikalische Größe (8) größer als ein vorbestimmter vierter Schwellenwert (2) ist,
**dass** der dritte Schwellenwert (3) größer als der erste Schwellenwert (1) ist,
**dass** der erste Sensor (21) ein kapazitiver Sensor und die erste physikalische Größe eine Kapazität (8) ist, und
**dass** der zweite Sensor (22) ein kapazitiver Sensor und die zweite physikalische Größe eine Kapazität (8) ist.

2. Verfahren nach Anspruch 1, **dadurch gekennzeichnet, dass** der vierte Schwellenwert (2) gleich dem zweiten Schwellenwert (2) ist.

3. Verfahren nach Anspruch 1 oder 2, **dadurch gekennzeichnet, dass** der erste Sensor (21) und der zweite Sensor (22) an einem Türaußengriff des Fahrzeugs (10) angebracht sind.

4. Verfahren nach Anspruch 3,
**dadurch gekennzeichnet,**
**dass** als die erste Bedienfunktion eine dem Türaußengriff zugeordnete Tür (14) des Fahrzeugs (10) automatisch verriegelt wird, während als die zweite Bedienfunktion die Tür (14) automatisch entriegelt wird, und
**dass** als die dritte Bedienfunktion mindestens ein Schließelement (13) des Fahrzeugs (10) automatisch geöffnet wird.

5. Verfahren nach Anspruch 4, **dadurch gekennzeichnet, dass** als die dritte Bedienfunktion alle automatisch zu öffnenden Fenster (13) und Schiebedächer des Fahrzeugs (10) automatisch geöffnet werden.

6. Verfahren nach Anspruch 4 oder 5, **dadurch gekennzeichnet, dass** das mindestens eine Schließelement (13) nur geöffnet wird, wenn vorher ein berechtigter ID-Geber erfasst wird.

7. Bedienvorrichtung für ein Fahrzeug (10),
wobei die Vorrichtung (20) eine Steuerung (9), einen ersten Sensor (21) und einen zweiten Sensor (22) umfasst,
wobei die Vorrichtung (20) derart ausgestaltet ist, dass die Steuerung (9) automatisch eine erste Bedienfunktion aktiviert, wenn der erste Sensor (21) erfasst, dass eine erste physikalische Größe (8) größer als ein vorbestimmter erster Schwellenwert (1) ist, und dass die Steuerung (9) automatisch eine zweite Bedienfunktion aktiviert, wenn der zweite Sensor (22) erfasst, dass eine zweite physikalische Größe (8) größer als ein vorbestimmter zweiter Schwellenwert (2) ist, wobei der erste Sensor (21) und der zweite Sensor (22) benachbart derart an dem Fahrzeug (10) angebracht sind, dass beide Sensoren (21, 22) von einer Bedienperson gleichzeitig aktiviert werden können,
**dadurch gekennzeichnet,**
**dass** die Vorrichtung (20) darüber hinaus derart ausgestaltet ist, dass die Steuerung (9) automatisch eine dritte Bedienfunktion aktiviert, wenn der erste Sensors (21) erfasst, dass die erste physikalische Größe (8) größer als ein vorbestimmter dritter Schwellenwert (3) ist, und wenn gleichzeitig der zweite Sensor (22) erfasst, dass die zweite physikalische Größe (8) größer als ein vorbestimmter vierter Schwellenwert (2) ist,
**dass** der dritte Schwellenwert (3) größer als der erste Schwellenwert (1) ist,
**dass** der erste Sensor (21) ein kapazitiver Sensor und die erste physikalische Größe eine Kapazität (8) ist, und
**dass** der zweite Sensor (22) ein kapazitiver Sensor und die zweite physikalische Größe eine Kapazität (8) ist.

8. Fahrzeug mit einer Bedienvorrichtung (20) nach Anspruch 7.

## Claims

1. Operating method for a vehicle (10),
a first operating function being activated if a first sensor (21) is used to sense that a first physical variable (8) is greater than a predetermined first threshold value (1), and
a second operating function being activated if a second sensor (22) is used to sense that a second physical variable (8) is greater than a predetermined second threshold value (2),
the first sensor (21) and the second sensor (22) being fitted to the vehicle (10) adjacent to one another in such a manner that both sensors (21, 22) can be simultaneously activated by an operator,
**characterized**
**in that** a third operating function is activated if the first sensor (21) is used to sense that the first physical variable (8) is greater than a predetermined third threshold value (3) and if the second sensor (22) is simultaneously used to sense that the second physical variable (8) is greater than a predetermined fourth threshold value (2),
**in that** the third threshold value (3) is greater than the first threshold value (1),
**in that** the first sensor (21) is a capacitive sensor and the first physical variable is a capacitance (8), and
**in that** the second sensor (22) is a capacitive sensor and the second physical variable is a capacitance (8).

2. Method according to Claim 1, **characterized in that** the fourth threshold value (2) is equal to the second threshold value (2).

3. Method according to Claim 1 or 2, **characterized in that** the first sensor (21) and the second sensor (22) are fitted to an exterior door handle of the vehicle (10).

4. Method according to Claim 3,
**characterized**
**in that** a door (14) of the vehicle (10) which is assigned to the exterior door handle is automatically locked as the first operating function, whereas the door (14) is automatically unlocked as the second operating function, and
**in that** at least one closing element (13) of the vehicle (10) is automatically opened as the third operating function.

5. Method according to Claim 4, **characterized in that** all windows (13) and sliding roofs of the vehicle (10) which can be automatically opened are automatically opened as the third operating function.

6. Method according to Claim 4 or 5, **characterized in that** the at least one closing element (13) is opened only if an authorized ID transponder is detected beforehand.

7. Operating apparatus for a vehicle (10),
the apparatus (20) comprising a controller (9), a first sensor (21) and a second sensor (22),
the apparatus (20) being configured in such a manner that the controller (9) automatically activates a first operating function if the first sensor (21) senses that a first physical variable (8) is greater than a predetermined first threshold value (1) and the controller (9) automatically activates a second operating function if the second sensor (22) senses that a second physical variable (8) is greater than a predetermined second threshold value (2),
the first sensor (21) and the second sensor (22) being fitted to the vehicle (10) adjacent to one another in such a manner that both sensors (21, 22) can be simultaneously activated by an operator,
**characterized**
**in that** the apparatus (20) is also configured in such a manner that the controller (9) automatically activates a third operating function if the first sensor (21) senses that the first physical variable (8) is greater than a predetermined third threshold value (3) and if the second sensor (22) simultaneously senses that the second physical variable (8) is greater than a predetermined fourth threshold value (2),
**in that** the third threshold value (3) is greater than the first threshold value (1),
**in that** the first sensor (21) is a capacitive sensor and the first physical variable is a capacitance (8), and
**in that** the second sensor (22) is a capacitive sensor and the second physical variable is a capacitance (8).

8. Vehicle having an operating apparatus (20) according to Claim 7.

## Revendications

1. Procédé de manipulation d'un véhicule (10), dans lequel
une première fonction de manipulation est activée si au moyen d'un premier capteur (21), il est détecté qu'une première grandeur physique (8) est supérieure à une première valeur de seuil (1) prédéterminée et une deuxième fonction de manipulation est activée si au moyen d'un deuxième capteur (22), il est détecté qu'une deuxième grandeur physique (8) est supérieure à une deuxième valeur de seuil (2) prédéterminée,
le premier capteur (21) et le deuxième capteur (22) étant placés au voisinage l'un de l'autre sur le véhicule (10) de telle sorte que les deux capteurs (21, 22) puissent être activés simultanément par un opérateur,
**caractérisé en ce que**
une troisième fonction de manipulation est activée si au moyen du premier capteur (21), il est détecté que la première grandeur physique (8) est supérieure à une troisième valeur de seuil (3) prédéterminée et si au moyen du deuxième capteur (22), il est détecté en même temps que la deuxième grandeur physique (8) est supérieure à une quatrième valeur de seuil (2) prédéterminée,
**en ce que** la troisième valeur de seuil (3) est supérieure à la première valeur de seuil (1),
**en ce que** le premier capteur (21) est un capteur capacitif et la première grandeur physique une capacité (8) et
**en ce que** le deuxième capteur (22) est un capteur capacitif et la deuxième grandeur physique est une capacité (8).

2. Procédé selon la revendication 1, **caractérisé en ce que** la quatrième valeur de seuil (2) est identique à la deuxième valeur de seuil (2).

3. Procédé selon les revendications 1 ou 2, **caractérisé en ce que** le premier capteur (21) et le deuxième capteur (22) sont placés sur la poignée extérieure d'une porte d'un véhicule (10).

4. Procédé selon la revendication 3, **caractérisé en ce que** la première fonction de manipulation verrouille automatiquement une porte (14) du véhicule (10) associée à la poignée de porte alors que la deuxième fonction de manipulation déverrouille automatiquement la porte (14), et **en ce que** la troisième fonction de manipulation ouvre automatiquement au moins un élément de fermeture (13) du véhicule (10).

5. Procédé selon la revendication 4, **caractérisé en ce que** la troisième fonction de manipulation ouvre automatiquement toutes les fenêtres (13) et toit coulissant à ouvrir automatiquement du véhicule (10).

6. Procédé selon les revendications 4 ou 5, **caractérisé en ce que** le ou les éléments de fermeture (13) ne sont ouverts que si la présence d'un émetteur d'ID autorisé a été préalablement détectée.

7. Ensemble de manipulation pour un véhicule (10), l'ensemble (20) comportant une commande (9), un premier capteur (21) et un deuxième capteur (22),
l'ensemble (20) étant configuré de telle sorte que la commande (9) active automatiquement une première fonction de manipulation si le premier capteur (21) détecte qu'une première grandeur physique (8) est supérieure à une première valeur de seuil (1) prédéterminée et que la commande (9) active automatiquement une deuxième fonction de manipulation si le deuxième capteur (22) détecte qu'une deuxième grandeur physique (8) est supérieure à une deuxième valeur de seuil (2) prédéterminée,
le premier capteur (21) et le deuxième capteur (22) étant placés au voisinage l'un de l'autre sur le véhicule (10) de telle sorte que les deux capteurs (21, 22) puissent être activés simultanément par un opérateur,
**caractérisé en ce que**
l'ensemble (20) est en outre configuré de telle sorte que la commande (9) active automatiquement une troisième fonction de manipulation si le premier capteur (21) détecte que la première grandeur physique (8) est supérieure à une troisième valeur de seuil (3) prédéterminée et si simultanément le deuxième capteur (22) détecte que la deuxième grandeur physique (8) est supérieure à une quatrième valeur de seuil (2) prédéterminée,
**en ce que** la troisième valeur de seuil (3) est supérieure à la première valeur de seuil (1),
**en ce que** le premier capteur (21) est un capteur capacitif et la première grandeur physique une capacité (8) et
**en ce que** le deuxième capteur (22) est un capteur capacitif et la deuxième grandeur physique est une capacité (8).

8. Véhicule doté d'un ensemble de manipulation (20) selon la revendication 7.
